(19) Europäisches Patentamt / European Patent Office / Office européen des brevets

(11) **EP 4 693 999 A1**

(12) **EUROPEAN PATENT APPLICATION**
published in accordance with Art. 153(4) EPC

(43) Date of publication:
**11.02.2026 Bulletin 2026/07**

(21) Application number: **24733844.5**

(22) Date of filing: **08.04.2024**

(51) International Patent Classification (IPC):
**H04L 5/00** $^{(2006.01)}$    **H04W 72/0446** $^{(2023.01)}$
**H04W 72/563** $^{(2023.01)}$

(52) Cooperative Patent Classification (CPC):
**H04L 5/00; H04W 72/0446; H04W 72/563**

(86) International application number:
**PCT/KR2024/004652**

(87) International publication number:
**WO 2024/210683 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 06.04.2023 US 202363457769 P
10.08.2023 US 202363532045 P

(71) Applicant: **LG Electronics Inc.**
**Seoul 07336 (KR)**

(72) Inventors:
• **CHOI, Minwoo**
**Seoul 06772 (KR)**
• **HWANG, Seunggye**
**Seoul 06772 (KR)**
• **KIM, Kijun**
**Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR WIRELESS SIGNAL TRANSMISSION AND RECEPTION IN WIRELESS COMMUNICATION SYSTEM**

(57) Disclosed are a method and apparatus for transmitting a sounding reference signal (SRS) for positioning by a user equipment (UE) in a wireless communication system. The method includes receiving SRS configuration information for configuring at least one SRS resource, and transmitting the SRS in a first SRS resource from among the at least one SRS resource based on the SRS configuration information.

FIG. 14

**Description**

**TECHNICAL FIELD**

The present disclosure relates to a wireless communication system, and more particularly, to a method and apparatus for transmitting and receiving a wireless signal.

**BACKGROUND**

Wireless communication systems are widely deployed to provide various kinds of communication services such as voice and data. In general, wireless communication systems are multiple access systems that can support communication with multiple users by sharing available system resources (bandwidth, transmission power, etc.). Examples of multiple access systems include code division multiple access (CDMA) systems, frequency division multiple access (FDMA) systems, time division multiple access (TDMA) systems, orthogonal frequency division multiple access (OFDMA) systems, and single carrier frequency division multiple access (SC-FDMA) systems.

**DISCLOSURE**

**Technical Problem**

An object of the present disclosure is to provide a method and apparatus for transmitting and receiving a signal more accurately and efficiently.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

**Technical Solution**

According to an aspect, a method of transmitting a sounding reference signal (SRS) for positioning by a user equipment (UE) in a wireless communication system includes receiving SRS configuration information for configuring at least one SRS resource, and transmitting the SRS in a first SRS resource from among the at least one SRS resource based on the SRS configuration information, wherein, based on the SRS configuration information including uplink time window information related with the first SRS resource, the UE configures an uplink time window related with the first SRS resource based on the uplink time window information, and the uplink time window is a duration in which the SRS is transmitted with priority over other types of signals.

Based on application of frequency hopping related with the first SRS resource and the SRS configuration information including the uplink time window information, the uplink time window may be configured with respect to the first SRS resource.

Based on the SRS configuration information not including uplink time window information related with the first SRS resource, the uplink time window may not be configured with respect to the first SRS resource.

The uplink time window information may include a time resource offset value in symbol or slot units.

A time resource preceding a start time resource of the first SRS resource provided in the SRS setting information by a time resource offset provided in the uplink time window information may be configured as a start time resource of the uplink time window.

The uplink time window may be configured based on a transmission duration of the first SRS resource and a time resource offset provided in the uplink time window information, and the transmission duration of the first SRS resource may be determined based on a start time resource of the first SRS resource, a length of the first SRS resource, and a frequency hopping configuration applied to the first SRS resource.

The frequency hopping configuration may include information about a number of hops and switching delay time between hops.

The uplink time window may be configured to start from a time resource preceding the start time resource of the transmission duration of the first SRS resource by the time resource offset and end in a time resource behind a last time resource of a transmission duration of the SRS resource by the time resource offset.

The uplink time window information may include a time resource offset determined based on a radio frequency (RF) retuning time.

According to an aspect, a non-transitory computer-readable recording medium having recorded thereon a program for executing the method may be provided.

According to an aspect, a user equipment (UE) for performing the method of transmitting a sounding reference signal (SRS) for positioning may be provided.

According to an aspect, a processing device for controlling a user equipment (UE) for performing the method of transmitting a sounding reference signal (SRS) for positioning may be provided.

According to an aspect, a method of receiving a sounding reference signal (SRS) for positioning in a wireless communication system includes transmitting SRS configuration information for configuring at least one SRS resource to a user equipment (UE), and receiving the SRS in a first SRS resource from among the at least one SRS resource based on the SRS configuration information from the UE, wherein, based on the SRS configuration information including uplink time window information related with the first SRS resource, an uplink time window is applied to the first SRS resource based on the uplink time window information, and the uplink time window is a duration in which the SRS is transmitted with priority over other types of signals.

According to an aspect, a base station (BS) for receiving a sounding reference signal (SRS) for positioning may be provided.

**Advantageous Effects**

According to an embodiment of the present disclosure, a signal may be transmitted or received more accurately and efficiently in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

**BRIEF DESCRIPTION OF THE DRAWINGS**

The accompanying drawings, which are included to provide a further understanding of the disclosure and are incorporated in and constitute a part of this application, illustrate embodiments of the disclosure and together with the description serve to explain the principle of the disclosure.

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot
FIG. 5 illustrates an exemplary physical downlink shared channel (PDSCH) reception and acknowledgement/negative acknowledgement (ACK/NACK) transmission process.
FIG. 6 illustrates an exemplary physical uplink shared channel (PUSCH) transmission process.
FIG. 7 illustrates an example of setting a positioning protocol.
FIG. 8 illustrates an example of OTDOA.
FIG. 9 illustrates an example of Multi RTT.
FIG. 10 shows a positioning structure of a next generation (NG) radio access network (RAN). The NR RAN may be referred to as NR RAN or 5G RAN.
FIG. 11 shows an example of a location service supported by NG-RAN.
FIG. 12 shows examples of a wireless sensing mode supported in ISAC.
FIG. 13 is a diagram to explain a method for requesting and configuring a TG between UE/B S/LMF.
FIG. 14 is a diagram to explain a method of transmitting an SRS for positioning by a UE.
FIG. 15 is a diagram to explain a method of receiving an SRS for positioning by a BS.
FIGS. 16 to 19 illustrate an example of a communication system 1 and wireless devices applicable to the present disclosure.

**DETAILED DESCRIPTION**

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

The term "base station" as used herein may be replaced by terms such as fixed station, Node B, gNode B (gNB), Access Point (AP), cell, or transmission and reception point (TRP). Repeater may be replaced by terms such as Relay Node (RN), Relay Station, etc. Also, the term "terminal" may be replaced by terms such as User Equipment (UE), Mobile Station (MS), Mobile Subscriber Station (MSS), Subscriber Station (SS), etc.

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321 Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System
- GPS: Global Positioning System
- LCS: LoCation Service
- LMF: Location Management Function
- LPP: LTE Positioning Protocol
- MO-LR: Mobile Originated Location Request
- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator

- RSTD: Reference Signal Time Difference
- ToA: Time of Arrival
- TP: Transmission Point
- TRP: Transmission and Reception Point
- UE: User Equipment
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- TX: Transmitter
- RX: Receiver
- RSTD: Reference Signal Time Difference
- RS: Reference Signal
- PRS: Positioning Reference Signal
- SRS: Sounding Reference Signal

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

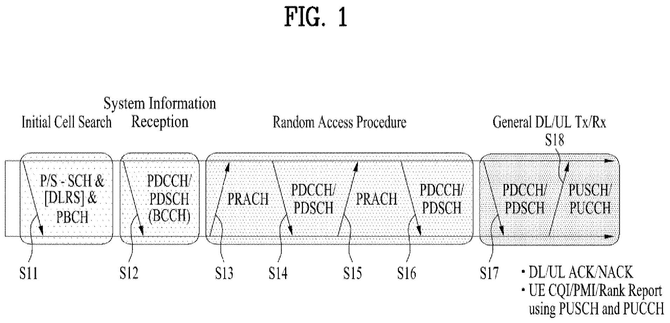

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

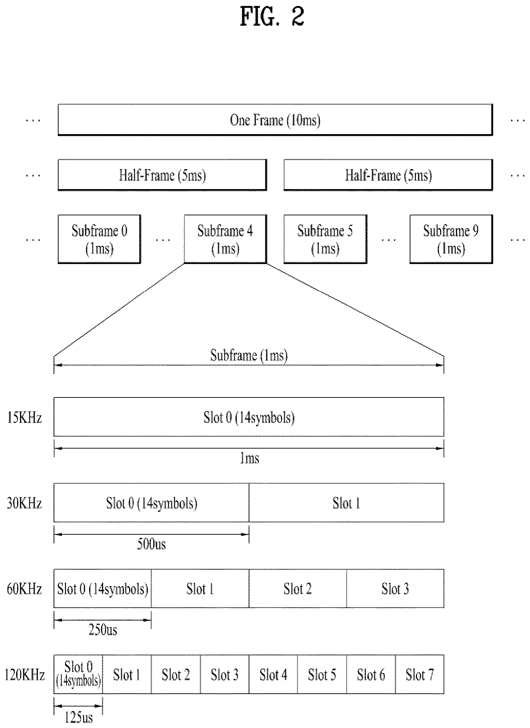

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot<br>* $N^{frame,u}_{slot}$: Number of slots in a frame<br>* $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

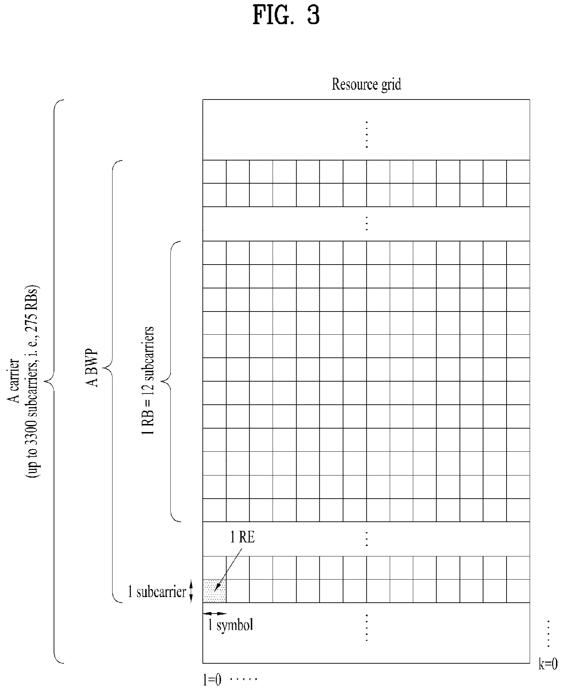

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

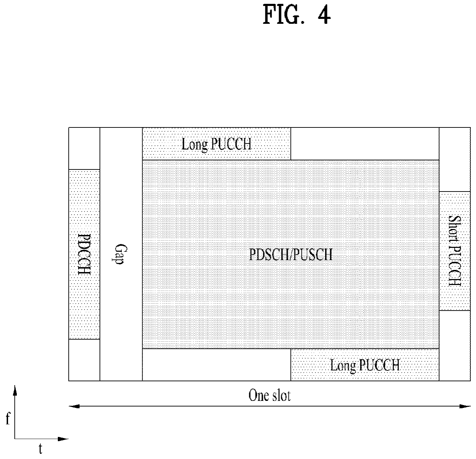

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

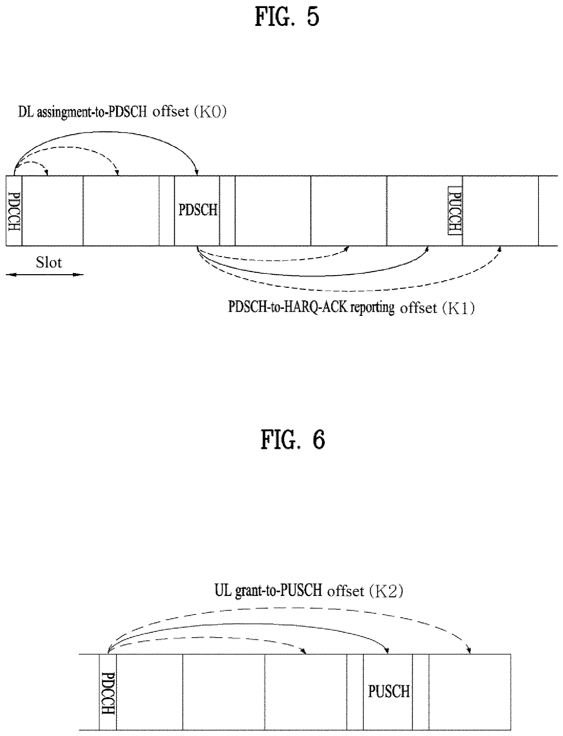

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot #(n+K1). The UCI may include an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

## SRS (sounding reference signal)

The SRS is a UL reference signal transmitted by a UE and received by a BS, and based on the SRS, the BS may perform link adaptation, DL channel estimation using channel reciprocity characteristics, UL beam management, UL precoding, and/or acquisition of UL measurement.

The UE may receive SRS configuration information (e.g., TS38.331 SRS-Config IE) provided by the BS and determine parameters for SRS transmission based thereon. A configuration of the SRS may include a list of SRS-Resources, SRS-PosResources, SRS-ResourceSets, and SRS-PosResourcesets, and in this case, each of SRS-ResourceSets and SRS-PosResourcesets may include a set of SRS-Resources and SRS-PosResources.

The SRS may be divided into three resource types depending on a configuration and transmission method of a time resource.

In the case of an SRS in which a resource type is configured to be periodic, the UE determines a location at which the SRS resource is transmitted based on a period and an offset with which an SRS resource configured via RRC is configured and periodically transmits the SRS without separate signaling when configured.

In the case of an SRS in which a resource type is configured to be semi-persistent, the UE determines a location at which the SRS resource is transmitted based on a period and an offset with which the SRS resource configured via RRC is configured and then starts periodic transmission of an indicated SRS when transmission of the SRS is activated by MAC CE. When deactivated by the MAC CE, the UE stops transmitting the SRS.

In the case of an SRS in which a resource type is configured to be aperiodic, the UE transmits an indicated SRS by applying the location of an offset configured via RRC based on a reception time of DCI instructing triggering for the corresponding SRS resource set.

## Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

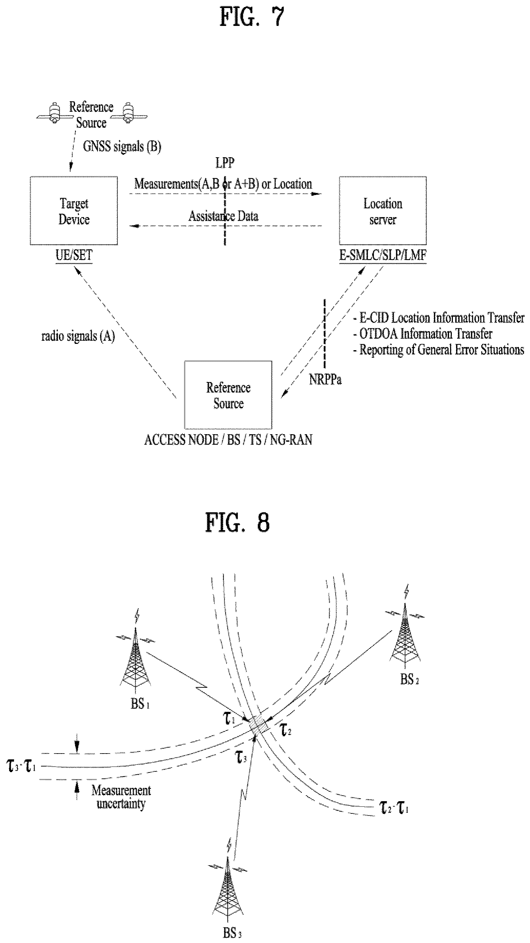

FIG. 7 is a diagram illustrating an exemplary positioning protocol configuration for positioning a UE, to which various embodiments are applicable.

Referring to FIG. 7, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference Of Arrival)

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTDi_{,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 1, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance ($T_{ADV}$), and/or AoA

Here, $T_{ADV}$ may be divided into Type 1 and Type 2 as follows.

$$T_{ADV} \text{ Type 1} = (\text{ng-eNB Rx-Tx time difference}) + (\text{UE E-UTRA Rx-Tx time difference})$$

$$T_{ADV} \text{ Type 2} = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

Multi RTT (round trip time)

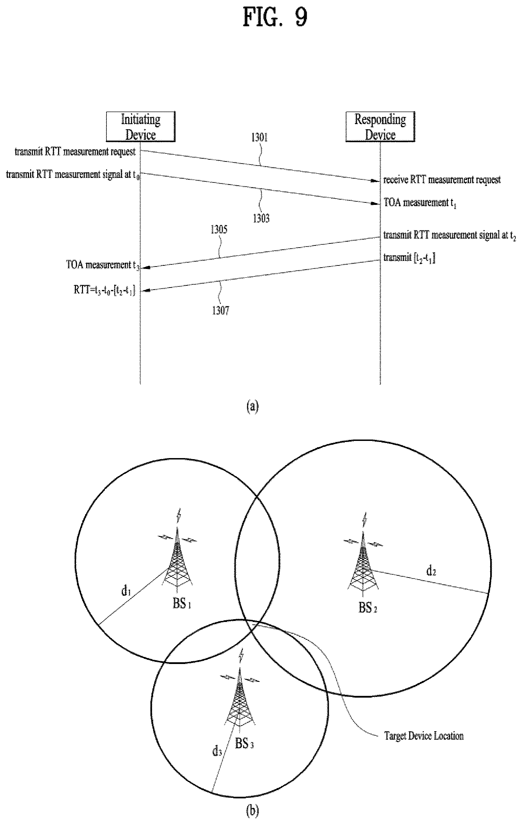

FIG. 9 is a diagram illustrating an exemplary multi-round trip time (multi-RTT) positioning method to which various embodiments are applicable.

Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at t0 and the responding device may acquire a ToA measurement t1(1303).

The responding device may transmit an RTT measurement signal at t2 and the initiating device may acquire a ToA measurement t3 (1305).

The responding device may transmit information about [t2-t1], and the initiating device may receive the information and calculate an RTT by Equation 2 (1307). The information may be transmitted and received based on a separate signal or in the RTT measurement signal (1305).

[Equation 2]

$$\mathrm{RTT} = t_3 - t_0 - [t_2 - t_1]$$

Referring to FIG. 9(b), an RTT may correspond to a double-range measurement between two devices. Positioning estimation may be performed from the corresponding information, and multilateration may be used for the positioning estimation. $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

NG-RAN positioning architecture and procedures

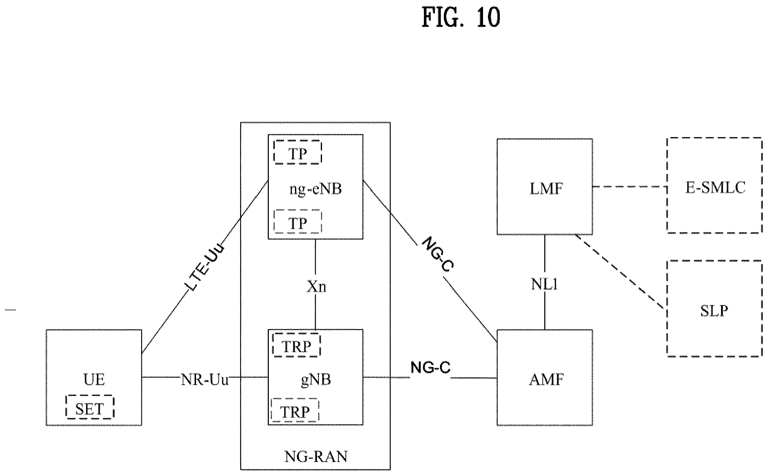

FIG. 10 shows a positioning structure of a next generation (NG) radio access network (RAN). The NR RAN may be referred to as NR RAN or 5G RAN.

An AMF may receive a request for some location services related to a specific target UE from another entity (e.g. GMLC or UE), or the AMF itself may determine to initiate some location services on behalf of a specific target UE (e.g. IMS emergency call). The AMF may then transmit a location service request to an LMF. The LMF may process the location service request, and processing of the location service request may include transmitting assistance data to a target UE and/or positioning the target UE for UE-based and/or UE-assisted positioning. The LMF transmits a location service results (e.g., location estimate for the UE) to the AMF. In the case of a location service requested by an entity other than the AMF (e.g., GMLC or UE), the AMF transmits the location service results to the corresponding entity.

An NG-RAN node may control TRP/TPs such as RRM or DL-PRS only TP to support PRS-based TBS.

The LMF may be connected to E-SMLCt to access UTRAN information.

The LMF may be connected to an SLP, which is responsible for positioning relative to a user plane.

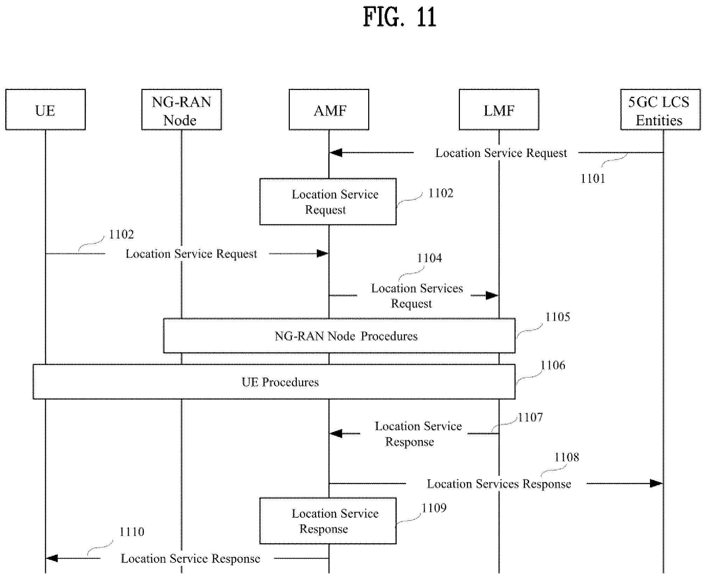

FIG. 11 shows an example of a location service supported by NG-RAN.

When the AMF receives a location service request when the UE is in a CM-IDLE state, the AMF performs a network trigger service request to configure signaling for connection to the UE and allocation of a specific serving gNB/ng-eNB. In FIG. 11, the UE is assumed to be in a connected mode.

The location service request for the UE may be triggered, and the location service request for the UE may be any of 1101, 1102, or 1103. For example, a 5GC entity (e.g., GMLC) may make a request for some location services (e.g., positioning) for the target UE to a serving AMF (1101), the serving AMF may autonomously trigger some location services (e.g., to search for a UE for emergency call) for the target UE (1102), or the UE may make a request for some location services (e.g., positioning or assistance data forwarding) to the serving AMF at a NAS level (1103).

The AMF forwards the location service request to the LMF (1104).

The LMF provides a service in NG-RAN to obtain location measurement or assistance data and starts a positioning procedure with nearby ng-eNB/gNB (1105).

(Instead of or in addition to operation 1105) the LMF initiates a positioning procedure with the UE to obtain location estimation or positioning measurement or transmit location assistance data to the UE (1106).

The LMF provides a location service response to the AMF (1107) (e.g., indication of success or failure and location estimation for the UE when requested and obtained).

(In the case of 1101), the AMF provides a location service response to the 5GC entity (1108) (e.g., location estimation for the UE).

(In the case of 1102), the AMF uses the location service response received in operation 1107 to support a service that triggers the same in operation 1102 (1109) (e.g., providing GMLC with location estimation related to emergency call).

(In the case of 1103) the AMF provides the location service response to the UE (1110) (e.g., location estimation for the UE).

**Sounding reference signal (SRS) for positioning**

In Rel.15N system, periodic, aperiodic, and semi-persistent Rel.15 SRS may be transmitted for measurement of UL-relative time of arrival (UL RTOA), UL SRS-RSRP, and UL-Angle of Arrival (UL-AOA) of a BS, and therethrough, UL TDOA and UL AOA may be supported.

In Rel.16/17 NR system, periodic, aperiodic, and semi-persistent SRS for positioning may be transmitted to measure UL RTOA, UL SRS-RSRP, UL-AOA, and gNB Rx-Tx time difference of the BS, and therethrough, UL TDOA, UL AOA, and multi-RTT may be supported.

An RRC parameter configured for the SRS may vary depending on the purpose of use, in the case of SRS for positioning as one of the RRC parameters, the configuration may be indicated through SRS-PosResources and SRS-PosResourceSet, and in the case of SRS (e.g., Rel.15 SRS) used for other purposes, the configuration may be indicated through SRS-Resources and SRS-ResourceSet.

To prevent confusion between SRS for positioning and SRS used for other purposes, hereinafter, the SRS for positioning will be referred to as SRS-p, and the SRS used for other purposes (e.g., beam management) will be referred to as SRS-m. In the newly proposed methods in the present disclosure below, unless there is a contrary explanation, the SRS may be interpreted to mean SRS-p.

An SRS resource mapping method in the time/frequency domain on a resource grid (e.g., FIG. 3) is defined in a standard document, and in the case of SRS-m, repetition may be configured within a slot, and intra-slot frequency hopping using this is supported. However, in the case of SRS-p, intra-slot repetition may not be configured based on the current NR standard (Rel-17), and intra-slot frequency hopping is also not supported. In the case of periodic/semi-persistent SRS-m, inter-slot frequency hopping is supported in periodic form.

SRS-p configuration may be provided based on a serving cell (or camp on cell) of the UE, and the SRS-p transmitted by the UE based on based on the SRS-p configuration may be received by one or more cells (or TRPs) including the corresponding serving cell.

For example, the SRS-p may be configured by SRS-PosResourceSet and SRS-PosResource that are RRC parameters defined in the TS 38.331 standard. In detail, when a higher layer parameter SRS-PosResource is configured for the SRS (i.e., SRS-p) and a higher layer parameter SpatialRelationInfoPos is configured, an ID of a configuration field of a reference reference signal is provided. A reference RS may include an SRS, a CSI-RS, an SS/PBCH block, a DL PRS of a serving cell, or a DL PRS provided in the SS/PBCH, which are configured by the higher layer parameter SRS-Resource or SRS-PosResource.

The UE is not expected to transmit multiple SRS resources with different spatial relationships in the same OFDM symbol.

When the higher layer parameter SpatialRelationInfoPos is not configured, the UE may use a fixed spatial domain transmission filter or use another spatial domain transmission filter for transmission of the SRS-p configured by the higher layer parameter SRS-PosResource across multiple SRS resources.

In RRC_CONNECTED mode, the UE transmits the SRS-p configured by the higher layer parameter SRS-PosResource within an active UL BWP.

Only one RS source is provided for the higher layer parameter SpatialRelationInfoPos provided for each SRS-p resource.

In the case of an operation on the same carrier, when the SRS-p collides with a scheduled PUSCH, the SRS-p is dropped from a symbol in which the collision occurs.

The UE does not expect SRS-PosResource to be configured on a carrier of a serving cell with a slot format including DL/UL symbols that are not configured for PUSCH/PUCCH transmission.

Depending on UE capabilities, an SRS-p resource related to the initial UL BWP may be configured, and the SRS-p resources are transmitted within the initial UL BWP during RRC_INACTIVE mode with the same CP and subcarrier spacing as configured for the initial UL BWP. Depending on UE capabilities, the SRS-p resource for positioning may be configured outside the initial BWP in an RRC_INACTIVE mode, and frequency location and bandwidth, subcarrier spacing, and CP length for SRS-p transmission may be configured. In the RRC_INACTIVE mode, the SRS-p resource configured outside the initial BWP are configured in the same band and CC as the initial UL BWP.

**Integrated** Sensing **And Communication** (ISAC)

Recently, various methods for utilizing wireless sensing have been discussed in wireless communication systems. In general, a method of using existing radar technology may be considered for the purpose of wireless sensing, but the radar technology has restrictions in that the technology is specialized for sensing and does not take into account the characteristics of communication and transmitting and receiving nodes require separate devices for transmitting and receiving signals for wireless sensing purposes. To resolve these problems, methods for utilizing wireless sensing (e.g. ISAC or joint communication and sensing (JCAS)) in wireless communication systems that support communication using a cellular network such as 5G and/or next-generation 6G have recently been actively developed.

In 3GPP standardization, a study to support ISAC in 5G/6G has begun. In TR 22.837 document published by 3GPP SA1 WG, wireless sensing is defined as a technology that uses radio waves to measure a distance, an angle, or an instantaneous speed as a technology to obtain information about environmental characteristics and/or surrounding objects. In this case, a scenario in which sensing and communication share the same frequency band and hardware may be considered, and a method in which radio waves for sensing share/reuse radio waves for communication purposes (e.g. use of reference signal for communication purposes (e.g., SSB, DMRS, CSI-RS, and/or SRS) or a method of separately designing radio waves for wireless sensing purposes may also be considered.

In general, wireless sensing supported by ISAC may be considered through a process in which a signal transmitted at a transmitting end is reflected by a target object and received at a receiving end, and a sensing mode for scenarios classified depending on a relationship between the transmitting end and the receiving end may be defined. Based on whether the transmitting end and the receiving end match each other, a case in which the transmitting end and the receiving end are the same may be defined as a mono-static sensing mode, and a case in which the transmitting end and the receiving end are different from each other may be defined as a bi-static sensing mode.

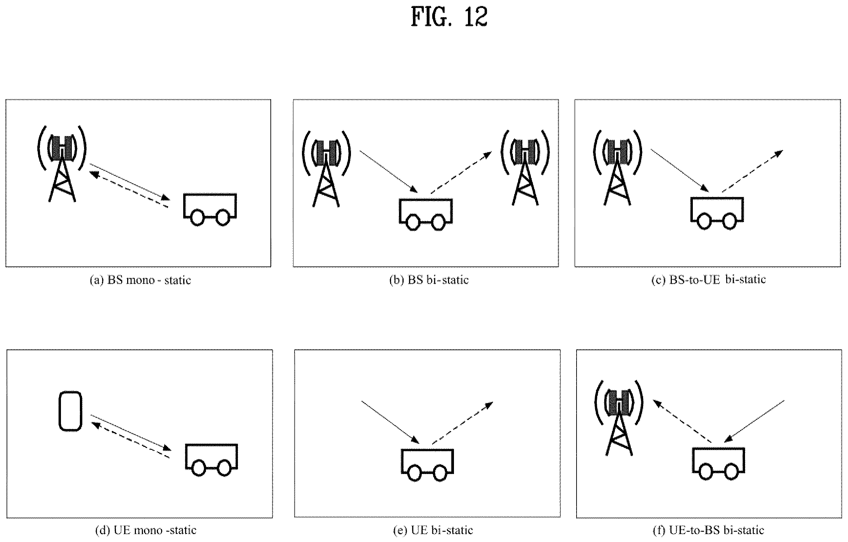

FIG. 12 shows examples of a wireless sensing mode supported in ISAC.

Referring to FIG. 12, in consideration of transmission and reception operations in the 3GPP standard and nodes participating in the operations, a sensing mode may be broadly divided as follows.

(a) BS mono-static sensing mode: The BS that transmits a radio wave receives a reflected signal.
(b) BS -to- BS bi-static sensing mode: Another BS receives a reflected signal of a radio wave transmitted by a specific BS.
(c) BS -to- UE bi-static sensing mode: The UE receives a reflected signal of a radio wave transmitted by the BS.
(d) BS mono-static sensing mode: The UE that transmits a radio wave receives a reflected signal.
(e) UE -to- UE bi-static sensing mode: Another UE receives a reflected signal of a radio wave transmitted by a specific transmitting UE.
(f) UE -to- BS bi-static sensing mode: The BS receives a reflected signal of a radio wave transmitted by a transmitting UE.

However, in addition to the six use cases described above, a sensing mode that includes multiple transmitting/receiving nodes may be referred to using the term multi-static sensing mode.

Wireless sensing through ISAC/JCAS is considered for application in various scenarios. In general, wireless sensing is considered to have the purpose of obtaining information about a target without a communication module (or independent of a communication module), and scenarios to be considered as an example may be broadly divided into three scenarios.

(1) Object detection and tracking: As a scenario for sensing a target object or person or tracking location information, typical considerations may include intruder sensing in indoor/outdoor situations, UAV or AGV location tracking, and autonomous driving support scenarios.
(2) Environment monitoring: As a scenario for collecting information about an environment around transmitting/receiving nodes, typical considerations may include rainfall information observation and flood sensing scenarios.
(3) Motion monitoring: As a scenario for sensing movement of an object, typical considerations may include scenarios for distinguishing human movements or gestures.

The performance measures and levels required for each of the above scenarios may be diverse and may be different from each other. To design ISAC/JCAS suitable for service quality required in each scenario, various key performance requirements need to be considered. The TS 22.137 document of the 3GPP standard defines positioning estimation accuracy, speed estimation accuracy, confidence level, sensing resolution, missed detection probability, false alarm probability, maximum delay of sensing service, and refreshing rate as the key performance requirements for the performance required in each service scenario, and a level required for each key performance requirement may vary depending on service scenario.

A radio frequency sensing function does not require connection to an object through a device in a network, and thus may provide a service for determining the location of the object without a device. A function of obtaining a range, speed, and angle information from a radio frequency signal may provide a wide range of new functions, such as diverse object sensing, object recognition (e.g., vehicle, human, animal, and UAV), and high-precision localization, tracking, and activity recognition. The wireless sensing service may provide information to a variety of industries (e.g., unmanned aerial vehicle, smart home, V2X, factory, railway, and public safety) that enable an application for providing, for example, intruder sensing, assisted vehicle steering and navigation, trajectory tracking, collision avoidance, traffic management, and health and traffic management. In some cases, wireless sensing may use a non-3GPP type sensor (e.g., radar or camera) to further support 3GPP-based sensing. For example, an operation of the wireless sensing service, that is, a sensing operation, may depend on transmission, reflection, and scattering processing of a wireless sensing signal. Therefore, wireless sensing may provide an opportunity to enhance the existing communication system from a communication network to a wireless communication and sensing network.

### Reduced Capability (RedCap) UE

Recently, in addition to the 5G main use cases (mMTC, eMBB and URLLC), use case areas spanning mMTC and eMBB, or mMTC and URLLC have received increasing importance/interest, and thus a need for a UE for efficiently supporting these use cases in terms of device cost, power consumption, form factor, or the like has increased. In the present disclosure, a UE for this purpose may be defined as a (NR) reduced capability (RedCap) UE/device. Apart from the RedCap device, a general NR UE that support all or one or more of 5G main use cases may be defined as NR (normal) UE/device or non-RedCap UE/device. The Redcap UE may be a UE for intentionally reducing some of 5G key capabilities (highest data rate, user experience data rate, latency, mobility, connection density, energy efficiency, spectrum efficiency, and regional traffic efficiency) defined in IMT-2020 to achieve all or part of low device cost/complexity, low power consumption, small form factor, and the like.

The area of 5G use cases spanning mMTC and eMBB, or mMTC and URLLC, which are target use cases of the Redcap device, is referred to as redcap use cases for convenience in the present disclosure. Redcap use cases may be, for example:

(1) Connected industries

1) A sensor and an actuator may be connected to a 5G network and a core.

- including large-scale industrial wireless sensor networks (IWSN) use cases and requirements
- Very demanding URLLC services as well as relatively low cost services requiring small device form factors with battery life of several years
- The requirements for the corresponding services are higher than low power wide area (LPWA), i.e. LTE-M/NB-IOT, but lower than URLCC and eMBB.
- Devices in these environments include: a pressure sensor, a humidity sensor, a thermometer, a motion sensor, an accelerometer, an actuator, and the like.

2) Smart city

- A vertical field of the smart city includes data collection and processing for more efficiently monitoring and controlling a city resource and providing a service to a city resident. In particular, surveillance camera deployment is an essential part not only in a smart city but also in a factory and an industrial site.

3) Wearable

- A wearable use case may include a smart watch, a ring, an eHealth-related device, and a medical monitoring device. One characteristic of the use case is a small size of a device.

The Redcap use cases may not be supported by low power wireless area (LPWA) UEs (e.g., LTE-M or NB-IoT) in terms of a bit rate, latency, or the like and may be functionally supported by an NR UE, but may be inefficient in terms of the manufacturing cost of a UE, form factor, battery life, and the like. Supporting the above use case areas in the 5G network with the redcap UE with characteristics such as low cost, low power, and small form factor may result in reduction of UE manufacturing and maintenance costs. Redcap use cases may have quite diverse requirements in terms of UE complexity, target bit rate, latency, power consumption, and the like. These redcap requirements may be divided into (generic) requirements that are commonly applied to all redcap use cases and (use case specific) requirements that are applied only to specific use case(s). Some representative generic and use case specific requirements may be defined as shown in Table 3 below.

[Table 3]

| 1. Generic requirements<br>- Device complexity/cost: Main motivation for the new device type is to lower the device cost and complexity as compared to high-end eMBB and URLLC devices of Rel-15/Rel-16.<br>This is especially the case for industrial sensors.<br>- Device size: Requirement for most use cases is that the standard enables a device design with compact form factor<br>- Deployment scenarios: System should support all FR1/FR2 bands for FDD and TDD<br>2. Use case specific requirements<br>- Industrial wireless sensors<br>-- Reference bit rate: < 2 Mbps (potentially UL heavy traffic)<br>-- End-to-end latency: < 100 ms; ~ 5-10 ms for safety related sensors<br>-- Battery: at least few years |
| --- |

(continued)

-- Communication service availability: 99.99%

-- Stationary

- Video Surveillance

-- Reference bit rate: < 2-4 Mbps for economic video; ~7.5-25 Mbps for high-end video (UL heavy traffic)

-- Latency: < 500 ms

-- Reliability: 99%-99.9%.

- Wearables

-- Reference bit rate: 10-50 Mbps in DL and >= 5 Mbps in UL for smart wearable application

-- Peak bit rate: 150 Mbps in DL and 50 Mbps in UL

-- Battery: multiple days (up to 1-2 weeks)

The above redcap requirements may be satisfied by (a combination of) various features provided by the UE and the BS, and the following shows examples of the features and sub-features supported by the UE/BS to satisfy the redcap requirements.

-> Complexity reduction features

- Reduced number of UE RX/TX antennas
- UE bandwidth reduction
- Half-Duplex-FDD
- Relaxed UE processing time
- Relaxed UE processing capability

-> Power saving

- Reduced PDCCH monitoring by smaller numbers of BDs and CCE limits
- Extended DRX for RRC Inactive and/or Idle
- RRM relaxation for stationary devices

-> Coverage recovery/enhancement

## Method and Device for UL SRS TG

3GPP has carried out standardization and technology development to support not only existing portable UEs, but also various devices such as MTC/NB-IoT, and as one of these technologies, gain is necessary in terms of cost by lowering the capability of existing NR, and reduced capability (RedCap) NR, which is less sensitive to a data rate and requires less importance in terms of latency, has been also introduced in Rel-17. UEs that support the corresponding Redcap may be wearables, industrial wireless sensors, video surveillances, or the like and may achieve capability gain through reduction in a supported bandwidth, reduction in the maximum supported number of MIMO layers, modulation orders, and Rx branches, and support of half-duplex (HD) in all bands.

The target requirements for positioning accuracy required for RedCap UEs in the current 3GPP NR Rel-18 standard are as follows, and most experiments show the result that does not satisfy the target performance requirements in Table 4 below. In the case of RedCap UEs, the maximum frequency bandwidth supported by the existing NR-supporting UEs is smaller than that of normal UEs, and thus there may be performance degradation in terms of decoding/detection accuracy of transmitted and received reference signals. Accordingly, frequency hopping of UL SRS has been discussed to improve the positioning accuracy of RedCap UEs in Rel-18. Currently, in the NR Rel-17 standard, a frequency hopping operation through an RRC parameter configuration is supported for an SRS for MIMO resource(s), and a frequency hopping operation is not supported for an SRS for positioning resource(s).

[Table 4]

|  | commercial use cases | IIoT use cases |
|---|---|---|
| Horizontal positioning accuracy | (< 3 m) for 90% of UEs | (< 1 m) for 90% of UEs |
| Vertical positioning accuracy | (< 3 m) for 90% of UEs | (< 3 m) for 90% of UEs |

Considering these characteristics and problems, the following proposes methods such as a frequency hopping operation and signaling for supporting accuracy performance improvement of a UL SRS-based positioning scheme of the RedCap UE. Hereinafter, the proposed method is explained focusing on an uplink-based positioning scheme based on the 3GPP NR system, but the proposed methods below are not limited thereto, and those skilled in the art will understand that the proposed method may be generally applied to other positioning schemes for determining positioning by estimating a distance or direction between a transmitting end and a UE. Therefore, even if there is no separate explanation, it is obvious that the methods proposed below may be applied to all types of transmission/reception methods and positioning schemes expected by the BS and the UE as long as the principles of the present disclosure are not infringed.

Hereinafter, a method proposed focusing on an SRS as a reference signal is described based on the 3GPP NR system, but the proposed methods below are not limited thereto, and those skill in the art will understand that the proposed method may be generally applied to other reference signals transmitted and received for communication between the BS and the UE. Therefore, even if there is no separate explanation, it is obvious that the methods proposed below may be applied to all types of transmission/reception methods and reference signals expected by the BS and the UE as long as the principles of the present disclosure are not infringed.

The methods proposed below may be applied in combination with the above. Each proposed method may be operated independently without any separate combination, or one or more proposed methods may be combined and operated in a linked form. Some terms, symbols, sequences, and the like used to describe the present disclosure may be replaced with other terms, symbols, sequences, and the like as long as the principles of the present disclosure are maintained.

Hereinafter, a method of configuring/instructing a transmission gap (TG) in the time domain in which transmission of other DL signals/channels or UL signals/channels is not expected for uplink SRS for positioning (SRSp) frequency hopping transmission will be described in detail.

A configuration method of the TG may include a configuration method based on a separately defined RRC configuration and a configuration method based on a configuration of SRS for positioning (SRSp) resource. The method based on the separately defined RRC configuration is described in Method 1, and the method based on the configuration of SRSp resources is described in Method 2.

### [Method 11 Separate TG-related RRC configuration

Hereinafter, a method of configuring a transmission gap (TG) in a separate RRC message from a configuration of the SRSp resource is proposed. TG configuration, TG request, TG instruction methods, and the like may be considered as the proposed method, and are separately described in detail.

The TG may also be defined as an uplink time window (UTW), and for convenience of explanation, is defined as TG.

1. RRC configuration of TG

The TG may pre-configure an RRC message. In detail, a new RRC information element (IE) including TG-related configuration information may be further defined in the RRC message, and an identifier (ID) for the TG-related configuration may be added. The TG-related configuration information may include a starting location, a length, and a periodicity.

2. Request of TG

The proposed TG request operation may be performed through UL MAC CE or NR positioning protocol A (NRPPa). The TG request method based on UL MAC CE is described in detail in Scenario 1, and the TG request method based on NRPPa is described in detail in Scenario 2.

(1) Scenario 1

When the proposed TG request is performed by the UE, a request operation by a medium access control (UL MAC) control element (CE) may be proposed. For example, a new MAC CE (e.g., SRS Transmission Gap Activation/-Deactivation Request) for a TG request may be additionally defined, and a field indicating a TG configuration ID assigned according to the proposed TG configuration method may be added within the MAC CE. The UE may perform the TG request operation (to the BS or LMF) based on the MAC CE.

In relation to the TG request of the UE, preferred TG configuration information (preferred TG configuration information) may be transmitted to the BS through UE assistance information. The UE assistance information may be a type of special-purpose RRC message supported in a certain scenario. The UE assistance information may include whether the TG is preferred, and the starting location, length, and period of the preferred TG. The UE may transmit the UE assistance information including information about preference on TG configuration to the BS by using additionally defined parameters before performing the TG request through the UL MAC CE.

(2) Scenario 2

When the TG request is performed by a location management function (LMF), the TG request may be performed through NRPPa. For example, a new NRPPa message (e.g., SRS TRANSMISSION ACTIVATION) for a TG request may be additionally defined, and a field indicating a TG configuration ID assigned according to the proposed TG configuration method may be added within the NRPPa message. The LMF may perform a TG request operation through the NRPPa message.

3. A/D instructions for TG configuration

The activation/deactivation (A/D) indication of the TG may be dynamically indicated through the DL MAC CE. For example, a new MAC CE (e.g., SRS Transmission Gap Activation/Deactivation Command) for a TG A/D instruction may be additionally defined, and a field indicating a TG configuration ID assigned according to the proposed TG configuration method may be added within the new MAC CE. In this case, the BS may perform the A/D instruction operation of the TG for the UE by using the DL MAC CE. When activation of a (specific) TG is instructed to the UE in the manner described above, the UE may apply the starting location/length/periodicity of the TG based on RRC configuration information corresponding to the indicated TG configuration ID to activate the (specific) TG. The UE may not activate the (specific) TG when there is no transmission of SRSp resources within a period of the TG according to configuration information of the indicated TG.

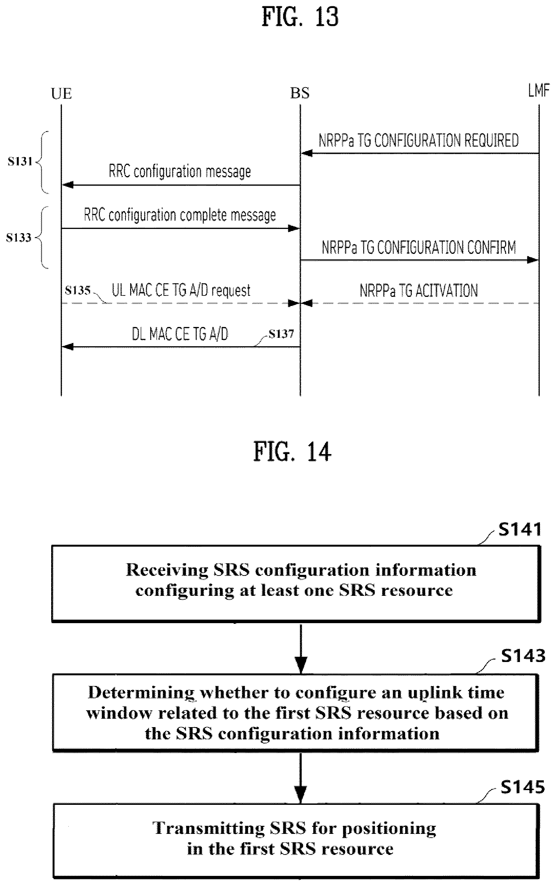

FIG. 13 is a diagram to explain a method for requesting and configuring a TG between UE/BS/LMF.
The UE, the BS, and the LMF may configure/activate the TG based on the above-described TG configuration, TG request, TG instruction method, and the like.
In detail, referring to FIG. 13, the UE may receive TG configuration information and an ID assigned to the TG configuration information through an RRC message from the BS (S131). After transmitting a TG RRC configuration complete message to the BS (S133), the UE may request activation/deactivation of the TG along with the TG configuration ID assigned through UL MAC CE (S135). The UE may obtain A/D instructions for the requested TG through the DL MAC CE of the BS (S137) and activate/deactivate the TG as instructed using the TG configuration information provided through a previous RRC message. The UE may transmit SRSp/SRSp resources at an SRSp resource transmission point and location(s) of the configured/indicated frequency resource configured/indicated by SRSp resource configuration information within the activated TG. The UE may expect that no other DL signal/channel or UL signal/channel will be transmitted and received within the activated TG. In other words, the UE may determine that transmission of the SRSp/SRSp resource has priority over other DL signals/channels or UL signals/channels within the TG.
Alternatively, referring to FIG. 13, the BS may receive a request for TG configuration from the LMF through NRPPa and provide the requested TG configuration information to the UE through an RRC message (S131). When a configuration complete message is obtained from the UE, the BS may transmit a configuration CONFIRM message to the LMF through an NRPPa message (S133). The BS may receive a request for TG activation from the UE or the LMF (S135), and after receiving the activation instruction, the BS may instruct the UE to activate the TG through the DL MAC CE (S137). The BS may receive SRSp resources transmitted from the UE at the transmission time of the SRSp resources configured/indicated and the location(s) of frequency resources configured/indicated within the TG to perform measurement for positioning and report the measurement result to the LMF. The BS may expect that no other DL signal/channel or UL signal/channel will be transmitted and received within the activated TG.
Alternatively, referring to FIG. 13, the LMF may request a TG configuration from the BS through NRPPa (S131) and receive a configuration CONFIRM message, which indicates/means that the UE successfully receives the TG configuration, from the BS through NRPPa. It can be received from the BS through NRPPa (S133). After receiving the configuration CONFIRM message, the LMF may request TG activation from the BS through the NRPPa (S135). The LMF may receive a report about positioning-related measurement(s) measured using SRSp resources transmitted from the UE within the TG, from the BS, and estimate the location of the UE by using the measurement(s).
The above-mentioned proposed method may be resource mapping of periodic/semi-periodic (P/SP) SRSp resources according to the configuration information of the TG (e.g., starting location, length, and periodicity), and in this case, the SRSp resource may be transmitted without collision with other signals/channels within the TG. In the case of resource mapping of aperiodic (AP) SRSp resources, the AP SRSp resource may be configured according to the location of the indicated TG and a starting position of the closest TG, and thus the AP SRSp resource may be transmitted without collision with other signals/channels within the TG.
In the above proposal, the operation of TG is mainly explained in a full-duplex frequency division duplexing (FD-FDD) or half-duplex frequency division duplexing (HD-FDD) environment, but may also be applied in a TDD environment as long as the spirit of the present disclosure is maintained without limitation thereto.

Hereinafter, a method in which TG configuration information is included in the SRSp resource configuration information and the TG is configured (or activated/deactivated) according to the start/end of a Tx frequency hopping operation of the SRSp resource will be proposed.

**[Method 21 Method of associating TG configuration with SRSp resource configuration**

In a predetermined scenario (NR Rel-17 standard), the RRC configuration of SRSp may be performed in association with active BWP configuration information, and the active BWP configuration information may include an SRSp resource set and a resource-related configuration. In this case, a method in which the TG is configured (or activated/deactivated) according to the start/end of transmission of the SRSp resource to associate the configuration information of the TG with the SRSp resource RRC configuration may be considered. For example, a new field (eg, TGConfig) may be additionally defined within the SRS-PosResource-16 IE included in the RRC configuration information of the SRSp resource. In this case, the new field may include offset information (or time resource offset information) or time domain buffer information added before and after the start/end of SRSp resource transmission in relation to the TG associated with the SRSp resource. Here, the offset information or the time domain buffer information may be configured/determined in consideration of an RF retuning time before and after the start/end of SRSp resource transmission. The starting location of the TG may be configured based on the starting location of the corresponding SRSp resource and the time domain buffer. The length of the TG may be configured based on the number of symbols of the corresponding SRSp resource, the number of hops in frequency hopping configuration, the switching delay between adjacent hops, and/or offset of the TG configuration (or time domain buffer). The periodicity of the TG may follow the periodicity of the corresponding SRSp resource. That is, when the SRSp resource of SRSp is configured to SP/AP/P type transmission by RRC/MAC-CE/DCI, the periodicity of the TG or SP/AP/P type may be configured according to the transmission type of the SRSp resource.

1. Method of configuring off/time domain buffer of TG

As a specific method of configuring the offset/time domain buffer for TG configuring, a method of explicitly configuring in symbol units and a method of configuring the length of the TG in slot units may be proposed.

(1) Option 1: Method of explicitly configuring offset/time domain buffer of the TG on a symbol basis

The length of the TG may be determined through the sum of the SRSp resource transmission duration and the offset/time domain buffer before and after the start/end of SRSp resource transmission. The offset/time domain buffer may be included in RRC configuration information for the TG (or configuration information for the TG within the SRSp resource RRC configuration) on a symbol basis. A value of the offset/time domain buffer may be configured such that a value of the offset/buffer before the start of SRSp resource transmission and a value of the offset/buffer after the end of SRSp resource transmission are the same or different. The proposed method may provide flexibility in TG configuration of the BS and minimize waste of time resources by configuring the length of the TG in symbol units.

(2) Option 2: Method of configuring the length of the TG in slot units

The length of the TG may be configured on a slot basis. In this case, the length of the TG may be configured to a slot duration to which the SRSp resource associated with the TG is allocated. Alternatively, a parameter of a slot offset for instructing/configuring a slot offset before and after the slot(s) to which the SRSp resource associated with the TG is allocated (e.g., before and after the slot included in the transmission duration of the SRS resource to which frequency hopping is applied) may be newly defined. In this case, the length of the TG may be configured on a slot basis. A slot offset value may be configured such that a slot offset value from a start symbol of the SRSp resource and a slot offset value from the last symbol of the SRSp resource (here, the last symbol of the SRSp resource is the last symbol of the transmission duration of the SRS resource to which frequency hopping is applied) are the same or different. Alternatively, the slot offset value includes a first slot offset value added before the start slot of the SRSp resource and a second slot offset added after the last slot of the SRSp resource (e.g., the last slot of the transmission duration of the SRS resource to which frequency hopping is applied), and the first slot offset value and the second slot offset value may be configured to the same or different values. The proposed method may save resources for configuring the TG, and the operation of the UE may be simplified by configuring the length of the TG on a slot basis.

2. Collision handling rule between TGs

When TGs associated with the SRSp resource are configured to overlap each other in the time domain, a collision rule in the overlapped duration between the TGs needs to be defined. In a specific method, a common priority rule may be applied to the entire duration to which the two overlapped TGs are assigned (i.e., the overlapped duration and the sections of each TG that do not overlap, hereinafter union TG). As an example of the common priority rule, the priority rule of SRSp resource(s) associated with each TG in the union TG may be configured based on a resource type. When a collision occurs between the SRSp resource and the PUSCH, the symbol of the overlapped SRSp resource may be dropped or the hop in which the symbol of the overlapped SRSp resource exists may be dropped. When a conflict occurs between SRSp resources associated with each TG within the union TG, the following dropping rule may be applied.

When SRSp resources configured to be aperiodic or semi-persistent or semi-periodic and SRSp resources configured to be periodic overlap each other, the overlapped symbol(s) of the SRSp resource configured to a periodic type (or, hop(s) containing the symbols) may be dropped, and SRSp resources may be transmitted in the remaining symbol(s) (or hop(s)). When the SRSp resource configured to be an aperiodic type and the SRSp resource configured to the semi-persistent type overlap each other, the overlapped symbol(s) of the SRSp resource configured to the semi-persistent type (or hop(s) including the symbols) may be dropped, and SRSp resources may be transmitted in the remaining symbol(s) (or hop(s)). The UE may not expect that the same time domain behavior type will be configured/instructed for the symbol(s) overlapped between two SRSp resources within the union TG.

When the proposed method is used, the UE may obtain configuration information of SRSp resource(s) provided by the BS. When the UE is expected to transmit the SRSp resource by frequency hopping, the UE may configure (or activate or deactivate) the TG based on the configuration information of the TG included in the configuration of the received SRSp resource. For example, when TG-related parameters are configured in the configuration information of the SRSp resource, the UE may configure the TG based on the value of the offset/time domain buffer included in the TG-related parameters. For example, the UE may expect the TG to start at a time location preceding the start time location of the SRSp resource included in the configuration information of the SRSp resource by a symbol corresponding to the value of the offset/time domain buffer. The UE may expect that a duration of the TG is configured to end after a symbol corresponding to the offset/time domain buffer from the number of symbols configured for the SRSp resource (e.g., the number of symbols included in the transmission duration of the SRSp resource to which frequency hopping is applied) as many as symbols corresponding to the value of the offset/time domain buffer. In other words, the UE may configure a duration from before a symbol corresponding to the offset/time domain buffer value in a start symbol of the SRSp resource included in the configuration information of the SRSp resource up to after a symbol corresponding to the value of the offset/time domain buffer in a last symbol of the transmission duration of the SRSp resource to which frequency hopping is applied, as a duration of the TG. For example, when the number of symbols corresponding to the offset/time domain buffer value is g, and the transmission duration of the SRSp resource to which the frequency hopping is applied is configured from n symbols (start symbol) to n+k symbols (the number of symbols is k), the duration of the TG may be configured from n-g symbols to n+k+g symbols. The UE may transmit SRSp/SRSp resources at the SRSp resource transmission point and location(s) of the configured/indicated frequency resource configured/indicated by SRSp resource configuration information within the configured (or activated) TG. The UE may expect that other DL signals/channels or UL signals/channels will not be transmitted or received within the configured (or activated) TG. In other words, the UE may transmit the SRSp/SRSp resources with priority over other DL signals/channels or UL signals/channels within the configured TG.

In the above-described TG configuration method, the LMF may transmit configuration information of SRSp resource(s) (to the UE) through the BS. The LMF may receive a report about positioning-related measurement(s) measured using SRSp resources transmitted from the UE within the TG, from the BS, and calculate/estimate the location of the UE based on the measurement(s).

In the case of Method 2, the activation point of the TG may be accurately indicated/configured not only for the transmission of P/SP SRSp resources but also for the transmission of AP SRSp resources, and the SRSp resources in the TG may not be transmitted, thereby preventing time resources from being wasted.

Alternatively, in the case of Method 1 or Method 2, even if a frequency hopping operation of SRSp resources is performed through the configuration of the TG, collisions with other DL signals/channels or UL signals/channels may be prevented, and maintenance of positioning accuracy and performance may be ensured as much as possible through collision prevention.

Although the above-mentioned TG configuration is described in a manner that is associated with each SRSp resource, Method 1 and/or Method 2 may also be applied when the TG configuration is associated with each SRSp resource set, BWP, UE, or carrier. Although the TG configuration is described to be associated with the SRSp resource configuration, Method 1 and/or Method 2 may also be applied when the TG configuration is associated with the frequency hopping configuration of the SRSp resource set. For example, the TG configuration may be included in an RRC message for the frequency hopping configuration to be associated with the frequency hopping configuration of the SRSp resource set. Alternatively, the TG configuration method has been described in detail considering the FD-FDD or HD-FDD environment, but the proposed method may naturally be applied to the TDD environment as well.

FIG. 14 is a diagram to explain a method of transmitting an SRS for positioning by a UE.

Referring to FIG. 14, the UE may receive SRS configuration information that configures at least one SRS resource (S141). The SRS configuration information may be associated with active BWP configuration information and transmitted to the UE through RRC signaling. The SRS configuration information may include information or configuring time/frequency resources for the at least one SRS resource and/or information for configuring at least one SRS resource set. For example, the SRS configuration information may include information on frequency resources, start time resources, number of symbols, and the like for the at least one SRS resource. The SRS configuration information may be delivered to the UE through higher layer signaling, for example, RRC signaling.

Then, the UE may determine whether to configure an uplink time window (UTW or TG) related to the first SRS resource from among the at least one SRS resource based on the SRS configuration information (S143). For example, the SRS configuration information may include uplink time window information corresponding to the first SRS resource. When transmitting the SRS on the first SRS resource, the UE may configure an uplink time window related to the first SRS resource based on the uplink time window information. That is, when the SRS configuration information further includes the time domain window information corresponding to the first SRS resource, the UE may configure an uplink time window associated with the first SRS resource (or transmission of the first SRS resource). Here, the uplink time window information may include the time domain buffer/time resource offset described above. The time domain buffer/time resource offset may be configured in units of symbols or slots, which are time resources. For example, the uplink time window information may include the first time resource offset related to the start of the uplink time window and the second time resource offset related to the end of the uplink time window. In this case, the first time resource offset and the second time resource offset may be configured to the same value or may be configured to different values. Alternatively, the first time resource offset and the second time resource offset may be determined based on a radio frequency (RF) retuning time of the UE. For example, the first time resource offset and the second time resource offset may be determined to a value equal to or greater than the RF retuning time of the UE.

In this case, the UE may configure the time domain window associated with the first SRS resource based on the uplink time window information. For example, the UE may configure/determine a time resource preceding the start time resource of the first SRS resource by the time resource corresponding to the time resource offset value as the start time resource of the uplink time window. The length of the uplink time window may be determined by considering the transmission duration of the first SRS resource (e.g., the transmission duration of the first SRS resource to which frequency hopping is applied). Here, when frequency hopping related to the first SRS resource is applied, the transmission duration of the first SRS resource may be determined/configured based on the start time resource of the first SRS resource, the length of the first SRS resource, the number of hops, and the switching delay time between adjacent hops, which are included in the SRS configuration information. The UE may determine the transmission duration of the first SRS resource to which the frequency hopping is applied and determine a time resource that lags by the time resource offset in the last time resource of the transmission duration of the first SRS resource as the last time resource of an uplink time window related to the first SRS resource. In this case, with regard to the length of the uplink time window, a time resource that lags by the time resource offset in the last time resource of the transmission duration of the first SRS resource from a time resource that precedes by the time resource corresponding to the time resource offset value from the start time resource of the first SRS resource may be configured/determined as a length to the last time resource of the uplink time window related to the first SRS resource.

Alternatively, the UE may additionally consider whether frequency hopping is applied to the first SRS resource. For example, when frequency hopping is applied to the first SRS resource and the SRS configuration information includes uplink time window information associated with the first SRS resource, the UE may configure the uplink time window associated with the first SRS resource. In contrast, when frequency hopping is not applied to the first SRS resource, even if the SRS configuration information includes uplink time window information associated with the first SRS resource, the UE may not configure the uplink time window associated with the first SRS resource. Alternatively, when the SRS configuration information does not include uplink time window information associated with the first SRS resource, even if frequency hopping is applied to the first SRS resource, the UE may not configure the uplink time window associated with the first SRS resource. In other words, the uplink time window associated with the first SRS resource may be activated based on application of frequency hopping to the first SRS resource.

Then, the UE may transmit the SRS for positioning in the first SRS resource (S145). When frequency hopping is applied to the first SRS resource, the UE may transmit the SRS in the first SRS resource in which hoping applied according to a frequency hopping pattern determined based on the number of hops, a bandwidth of a hop, a switching delay time between adjacent hops, and the number of overlapped RBs between hops, which are configured based on the frequency hopping configuration.

Here, the uplink time window is a duration in which transmission of the SRS takes precedence over transmission of other UL/DL signals. In other words, the uplink time window may be a duration in which the BS/UE is not expected to transmit or receive other DL signals/channels or UL signals/channels. That is, when an uplink time window related to the transmission duration of the first SRS resource is configured, the UE may perform the SRS transmission with priority over other UL transmission/DL reception. For example, when the SRS transmission collides with transmission of another UL, the UE may drop transmission of the other UL and first perform the SRS transmission.

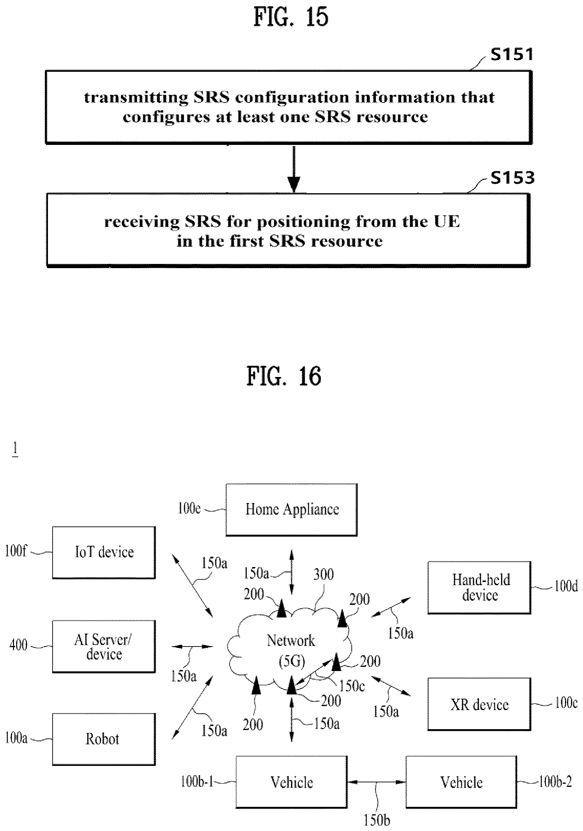

FIG. 15 is a diagram to explain a method of receiving an SRS for positioning by a BS.

Referring to FIG. 15, the BS may transmit SRS configuration information that configures at least one SRS resource to the UE (S141). The SRS configuration information may be associated with active BWP configuration information and transmitted to the UE through RRC signaling. The SRS configuration information may include information for configuring time/frequency resources for the at least one SRS resource and/or information for configuring at least one SRS resource set. For example, the SRS configuration information may include information on frequency resources, start time resources, number of symbols, and the like for the at least one SRS resource.

Then, the BS may receive the SRS for positioning in the first SRS resource from the UE (S153). When frequency hopping is applied to the first SRS resource, the BS may receive the SRS in the first SRS resource in which hoping applied according to a frequency hopping pattern determined based on the number of hops, a bandwidth of a hop, a switching delay time between adjacent hops, and the number of overlapped RBs between hops, which are configured based on the frequency hopping configuration. In this case, the BS may calculate measurement values for positioning by combining the SRSs received from the plurality of hops, and report the calculated measurement values to the LMF.

Alternatively, the BS may transmit the SRS configuration information further including uplink time window information associated with the first SRS resource. In this case, an uplink time window based on the uplink time window information may be applied to the first SRS resource. Alternatively, the BS may further include uplink time window information associated with the first SRS resource in the SRS configuration information based on a request from the UE or a request from the LMF. Alternatively, configuration of the uplink time window may be activated when the frequency hopping configuration for the first SRS resource is applied. Here, the uplink time window information may include the time domain buffer/time resource offset described above. For example, the uplink time window information may include the first time resource offset related to the start of the uplink time window and the second time resource offset related to the end of the uplink time window. In this case, the first time resource offset and the second time resource offset may be configured to the same value or may be configured to different values. Alternatively, the first time resource offset and the second time resource offset may be determined based on a radio frequency (RF) retuning time of the UE. For example, the first time resource offset and the second time resource offset may be determined to a value equal to or greater than the RF retuning time of the UE. The time domain buffer/time resource offset may be configured in units of symbols or slots, which are time resources.

As such, the proposed disclosure may clearly instruct/configure the uplink time window even for an aperiodic type SRS resource while minimizing the number of parameters required to configure the uplink time window through configuration of the time domain associated with the SRS resource.

Alternatively, the proposed disclosure may effectively prevent collisions with other signals/channels by configuring the uplink time window even if the SRS transmission duration increases due to frequency hopping being applied to the SRS resource for positioning.

Alternatively, the proposed disclosure may effectively prevent collisions with other signals/channels by configuring the uplink time window, thereby maximizing positioning performance and accuracy through a combination of a plurality of hops through which SRS is transmitted.

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

FIG. 16 illustrates a communication system applied to the present disclosure.

Referring to FIG. 16, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be

**EP 4 693 999 A1**

implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

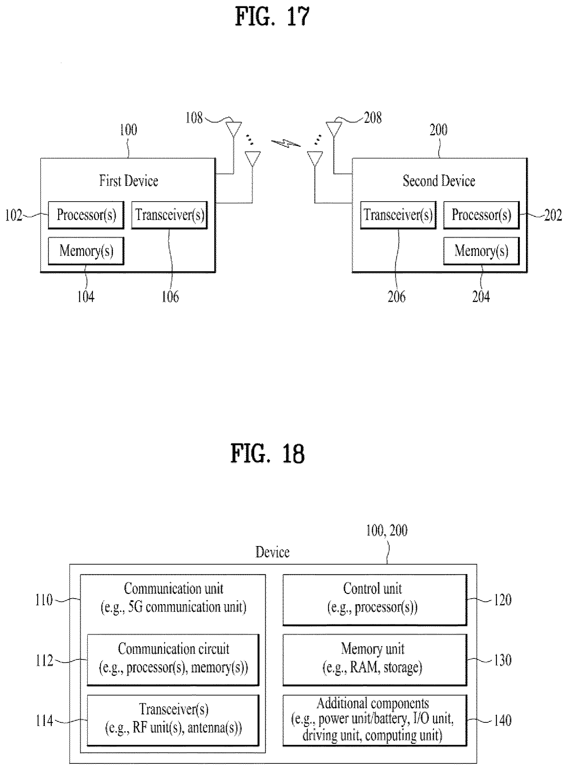

FIG. 17 illustrates a wireless device applicable to the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

In detail, the first wireless device or UE 100 may include the processor 102 and the memory 104 connected to the transceiver 106. The memory 104 may include at least one program for performing operations related to the embodiments described in FIGS. 13 to 15.

The processor 102 may control the transceiver 106 to receive SRS configuration information for configuring at least one SRS resource and transmit the SRS in a first SRS resource from among the at least one SRS resource based on the SRS configuration information, and based on the SRS configuration information including uplink time window information related with the first SRS resource, the processor 102 may configure an uplink time window related with the first SRS resource based on the uplink time window information. Here, the uplink time window may be a duration in which the SRS is transmitted with priority over other types of signals.

Alternatively, a processing device may be configured including the processor 102 and the memory 104 that control a UE to transmit a message. In this case, the processing device may include at least one processor, and at least one computer memory connected to the at least one processor and configured to store instructions, and in this case, based on being executed by the at least one processor, the instructions may cause the UE to receive SRS configuration information for configuring at least one SRS resource and transmit the SRS in a first SRS resource from among the at least one SRS resource based on the SRS configuration information, and based on the SRS configuration information including uplink time window information related with the first SRS resource, the processing device may configure an uplink time window related with the first SRS resource based on the uplink time window information. Here, the uplink time window may be a duration in which the SRS is transmitted with priority over other types of signals.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

In detail, the second wireless device or network 200 may include the processor 202 and the memory 204 connected to a transceiver or RF transceiver 206. The memory 204 may include at least one program for performing operations related to the embodiments described in FIGS. 13 to 15.

The processor 202 may control the transceiver 206 to transmit SRS configuration information for configuring at least one SRS resource to the UE and receive the SRS in a first SRS resource from among the at least one SRS resource from the UE based on the SRS configuration information. Here, based on the SRS configuration information including uplink time window information related with the first SRS resource, an uplink time window may be applied to the first SRS resource based on the uplink time window information, and the uplink time window may be a duration in which the SRS is transmitted with priority over other types of signals.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of wireless devices to which the present disclosure is applied

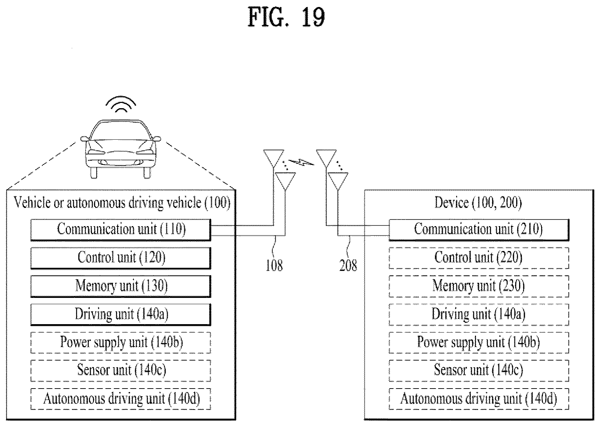

FIG. 18 illustrates another example of a wireless device applied to the present disclosure. The wireless device may be implemented in various forms according to a use-case/service (refer to FIG. 19).

Referring to FIG. 18, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 19 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 19, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network including a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

[Industrial Availability]

The above-described embodiments of the present disclosure are applicable to various mobile communication systems.

**Claims**

1. A method of transmitting a sounding reference signal (SRS) for positioning by a user equipment (UE) in a wireless communication system, the method comprising:

   receiving SRS configuration information for configuring at least one SRS resource; and
   transmitting the SRS in a first SRS resource from among the at least one SRS resource based on the SRS configuration information,
   wherein, based on the SRS configuration information including uplink time window information related with the first SRS resource, the UE configures an uplink time window related with the first SRS resource based on the uplink time window information, and
   wherein the uplink time window is a duration in which the SRS is transmitted with priority over other types of signals.

2. The method of claim 1, wherein, based on application of frequency hopping related with the first SRS resource and the SRS configuration information including the uplink time window information, the uplink time window is configured with respect to the first SRS resource.

3. The method of claim 1, wherein, based on the SRS configuration information not including uplink time window information related with the first SRS resource, the uplink time window is not configured with respect to the first SRS resource.

4. The method of claim 1, wherein the uplink time window information includes a time resource offset value in symbol or slot units.

5. The method of claim 1, wherein a time resource preceding a start time resource of the first SRS resource provided in the SRS setting information by a time resource offset provided in the uplink time window information is configured as a start time resource of the uplink time window.

6. The method of claim 1, wherein the uplink time window is configured based on a transmission duration of the first SRS resource and a time resource offset provided in the uplink time window information, and
the transmission duration of the first SRS resource is determined based on a start time resource of the first SRS resource, a length of the first SRS resource, and a frequency hopping configuration applied to the first SRS resource.

7. The method of claim 6, wherein the frequency hopping configuration includes information about a number of hops and switching delay time between hops.

8. The method of claim 6, wherein the uplink time window is configured to start from a time resource preceding the start time resource of the transmission duration of the first SRS resource by the time resource offset and end in a time resource behind a last time resource of a transmission duration of the SRS resource by the time resource offset.

9. The method of claim 1, wherein the uplink time window information includes a time resource offset determined based on a radio frequency (RF) retuning time.

10. A computer-readable recording medium having recorded thereon a program for executing the method of claim 1.

11. A user equipment (UE) for transmitting a sounding reference signal (SRS) for positioning in a wireless communication system, the UE comprising:

   a radio frequency (RF) transceiver; and
   a processor connected to the RF transceiver,
   wherein the processor controls the RF transceiver to receive SRS configuration information for configuring at least one SRS resource and transmit the SRS in a first SRS resource from among the at least one SRS resource based on the SRS configuration information, and based on the SRS configuration information including uplink time window information related with the first SRS resource, the processor configures an uplink time window related with the first SRS resource based on the uplink time window information, and
   wherein the uplink time window is a duration in which the SRS is transmitted with priority over other types of signals.

12. The UE of claim 11, wherein, based on application of frequency hopping related with the first SRS resource and the SRS configuration information including the uplink time window information, the uplink time window is configured with respect to the first SRS resource.

13. A processing device for controlling a user equipment (UE) for transmitting a sounding reference signal (SRS) for positioning in a wireless communication system, the processing device comprising:

   at least one processor; and
   at least one memory connected to the at least one processor and configured to store instructions,
   wherein, based on being executed by the at least one processor, the instructions cause the UE to receive SRS configuration information for configuring at least one SRS resource and transmit the SRS in a first SRS resource from among the at least one SRS resource based on the SRS configuration information, wherein, based on the SRS configuration information including uplink time window information related with the first SRS resource, the UE configures an uplink time window related with the first SRS resource based on the uplink time window information, and
   wherein the uplink time window is a duration in which the SRS is transmitted with priority over other types of signals.

14. A method of receiving a sounding reference signal (SRS) for positioning in a wireless communication system, the method comprising:

transmitting SRS configuration information for configuring at least one SRS resource to a user equipment (UE); and

receiving the SRS in a first SRS resource from among the at least one SRS resource based on the SRS configuration information from the UE,

wherein, based on the SRS configuration information including uplink time window information related with the first SRS resource, an uplink time window is applied to the first SRS resource based on the uplink time window information, and

wherein the uplink time window is a duration in which the SRS is transmitted with priority over other types of signals.

15. A base station (BS) for receiving a sounding reference signal (SRS) for positioning in a wireless communication system, the BS comprising:

a radio frequency (RF) transceiver; and

a processor connected to the RF transceiver,

wherein the processor controls the transceiver to transmit SRS configuration information for configuring at least one SRS resource to a user equipment (UE) and receive the SRS in a first SRS resource from among the at least one SRS resource from the UE based on the SRS configuration information,

based on the SRS configuration information including uplink time window information related with the first SRS resource, an uplink time window is applied to the first SRS resource based on the uplink time window information, and

wherein the uplink time window is a duration in which the SRS is transmitted with priority over other types of signals.

# FIG. 1

Initial Cell Search | System Information Reception | Random Access Procedure | General DL/UL Tx/Rx

| P/S - SCH & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S18

S11 · S12 · S13 · S14 · S15 · S16 · S17

· DL/UL ACK/NACK
· UE CQI/PMI/Rank Report using PUSCH and PUCCH

EP 4 693 999 A1

# FIG. 2

| One Frame (10ms) |
|---|

| Half-Frame (5ms) | Half-Frame (5ms) |
|---|---|

| Subframe 0 (1ms) | Subframe 4 (1ms) | Subframe 5 (1ms) | Subframe 9 (1ms) |
|---|---|---|---|

Subframe (1ms)

**15KHz**

| Slot 0 (14symbols) |
|---|

1ms

**30KHz**

| Slot 0 (14symbols) | Slot 1 |
|---|---|

500us

**60KHz**

| Slot 0 (14symbols) | Slot 1 | Slot 2 | Slot 3 |
|---|---|---|---|

250us

**120KHz**

| Slot 0 (14symbols) | Slot 1 | Slot 2 | Slot 3 | Slot 4 | Slot 5 | Slot 6 | Slot 7 |
|---|---|---|---|---|---|---|---|

125us

# FIG. 3

Resource grid

A carrier
(up to 3300 subcarriers, i. e., 275 RBs)

A BWP

1 RB = 12 subcarriers

1 RE

1 subcarrier

1 symbol

l=0 · · · · ·

k=0

# FIG. 4

# FIG. 5

DL assingment-to-PDSCH offset (K0)

Slot

PDSCH-to-HARQ-ACK reporting offset (K1)

# FIG. 6

UL grant-to-PUSCH offset (K2)

# FIG. 7

Reference Source

GNSS signals (B)

LPP
Measurements(A,B or A+B) or Location

Assistance Data

Target Device

UE/SET

Location server

E-SMLC/SLP/LMF

radio signals (A)

- E-CID Location Information Transfer
- OTDOA Information Transfer
- Reporting of General Error Situations

NRPPa

Reference Source

ACCESS NODE / BS / TS / NG-RAN

# FIG. 8

BS₁

BS₂

$\tau_1$

$\tau_2$

$\tau_3$

$\tau_3 - \tau_1$

Measurement uncertainty

$\tau_2 - \tau_1$

BS₃

# FIG. 9

(a)

(b)

# FIG. 10

EP 4 693 999 A1

# FIG. 11

FIG. 12

(a) BS mono - static

(b) BS bi-static

(c) BS-to-UE bi-static

(d) UE mono -static

(e) UE bi-static

(f) UE-to-BS bi-static

# FIG. 13

UE          BS          LMF

NRPPa TG CONFIGURATION REQUIRED

S131    RRC configuration message

RRC configuration complete message

S133    NRPPa TG CONFIGURATION CONFIRM

S135   UL MAC CE TG A/D request     NRPPa TG ACITVATION

DL MAC CE TG A/D    S137

# FIG. 14

S141

**Receiving SRS configuration information configuring at least one SRS resource**

S143

**Determining whether to configure an uplink time window related to the first SRS resource based on the SRS configuration information**

S145

**Transmitting SRS for positioning in the first SRS resource**

## FIG. 15

S151

transmitting SRS configuration information that configures at least one SRS resource

S153

receiving SRS for positioning from the UE in the first SRS resource

## FIG. 16

# FIG. 17

First Device
100

108
208
200
Second Device

102
Processor(s)    Transceiver(s)

Transceiver(s)    Processor(s)
202

Memory(s)

Memory(s)

104    106

206    204

# FIG. 18

Device
100, 200

110
Communication unit
(e.g., 5G communication unit)

Control unit
(e.g., processor(s))
120

112
Communication circuit
(e.g., processor(s), memory(s))

Memory unit
(e.g., RAM, storage)
130

114
Transceiver(s)
(e.g., RF unit(s), antenna(s))

Additional components
(e.g., power unit/battery, I/O unit,
driving unit, computing unit)
140

# FIG. 19

| Vehicle or autonomous driving vehicle (100) |
| --- |
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

| Device (100, 200) |
| --- |
| Communication unit (210) |
| Control unit (220) |
| Memory unit (230) |
| Driving unit (140a) |
| Power supply unit (140b) |
| Sensor unit (140c) |
| Autonomous driving unit (140d) |

# EP 4 693 999 A1

<table>
<tr><td colspan="2" align="center">**INTERNATIONAL SEARCH REPORT**</td><td>International application No.<br>**PCT/KR2024/004652**</td></tr>
</table>

**A. CLASSIFICATION OF SUBJECT MATTER**

**H04L 5/00**(2006.01)i; **H04W 72/0446**(2023.01)i; **H04W 72/563**(2023.01)i

According to International Patent Classification (IPC) or to both national classification and IPC

**B. FIELDS SEARCHED**

Minimum documentation searched (classification system followed by classification symbols)

H04L 5/00(2006.01); H04B 7/06(2006.01); H04W 4/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포지셔닝(positioning), SRS(Sounding Reference Signal), 자원(resource), 시간 윈도우(time window), 주파수 호핑(frequency hopping)

**C. DOCUMENTS CONSIDERED TO BE RELEVANT**

| Category* | Citation of document, with indication, where appropriate, of the relevant passages | Relevant to claim No. |
|---|---|---|
| Y | WO 2022-080817 A1 (LG ELECTRONICS INC.) 21 April 2022 (2022-04-21)<br>See paragraphs [0291]-[0294], [0421]-[0423], [0456] and [0580]-[0581]; and claims 1-5. | 1-15 |
| Y | NOKIA et al. Views on Positioning for RedCap UEs. R1-2300780, 3GPP TSG RAN WG1 Meeting #112. Athens, Greece. 17 February 2023.<br>See sections 2.2-2.3. | 1-15 |
| A | KR 10-2022-0137069 A (VIVO MOBILE COMMUNICATION CO., LTD.) 11 October 2022 (2022-10-11)<br>See paragraphs [0046]-[0273]; and figures 2-5. | 1-15 |
| A | KR 10-2020-0130187 A (LG ELECTRONICS INC.) 18 November 2020 (2020-11-18)<br>See paragraphs [0393]-[0447]; and figures 9-11. | 1-15 |
| A | WO 2023-046371 A1 (SONY GROUP CORPORATION et al.) 30 March 2023 (2023-03-30)<br>See claims 1-33. | 1-15 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 July 2024** | **23 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/004652**

| Patent document cited in search report | | | Publication date (day/month/year) | Patent family member(s) | | | Publication date (day/month/year) |
|---|---|---|---|---|---|---|---|
| WO | 2022-080817 | A1 | 21 April 2022 | EP | 4228191 | A1 | 16 August 2023 |
| | | | | KR | 10-2023-0084477 | A | 13 June 2023 |
| KR | 10-2022-0137069 | A | 11 October 2022 | AU | 2020-104307 | A4 | 28 January 2021 |
| | | | | BR | 112022014791 | A2 | 20 September 2022 |
| | | | | CN | 113225816 | A | 06 August 2021 |
| | | | | CN | 113301495 | A | 24 August 2021 |
| | | | | EP | 4093121 | A1 | 23 November 2022 |
| | | | | EP | 4102860 | A1 | 14 December 2022 |
| | | | | JP | 2023-513881 | A | 04 April 2023 |
| | | | | KR | 10-2022-0131384 | A | 27 September 2022 |
| | | | | US | 2022-0357418 | A1 | 10 November 2022 |
| | | | | US | 2022-0376830 | A1 | 24 November 2022 |
| | | | | WO | 2021-155670 | A1 | 12 August 2021 |
| | | | | WO | 2021-155765 | A1 | 12 August 2021 |
| | | | | WO | 2021-155793 | A1 | 12 August 2021 |
| KR | 10-2020-0130187 | A | 18 November 2020 | CN | 113812113 | A | 17 December 2021 |
| | | | | EP | 3955503 | A1 | 16 February 2022 |
| | | | | US | 2022-224444 | A1 | 14 July 2022 |
| | | | | WO | 2020-231125 | A1 | 19 November 2020 |
| WO | 2023-046371 | A1 | 30 March 2023 | None | | | |

Form PCT/ISA/210 (patent family annex) (July 2022)